# EUROPEAN PATENT SPECIFICATION

(11) **EP 2 344 577 B1**
(45) Date of publication and mention of the grant of the patent: **26.02.2014**
(21) Application number: 09740079.0
(22) Date of filing: 05.10.2009
(51) Int. Cl.: C08J 7/04, C08L 29/04, C08L 39/00, C08K 5/10, C09D 129/04, C08L 33/00, C09D 139/00, B32B 27/08

(54) **PRINTABLE GAS BARRIERS**
BEDRUCKBARE SUBSTRATE MIT GASBARRIERE
BARRIÈRES AUX GAZ IMPRIMABLES

(30) Priority: 07.10.2008 US 195414 P
(43) Date of publication of application: 20.07.2011
(73) Proprietor: BASF SE, 67056 Ludwigshafen (DE)
(72) Inventor: CHIAPPINI, Emanuela, I-63035 Offida (IT); GARDI, Stefano, I-40122 Bologna (IT); NAISBY, Andrew, J., Kennett Square PA 19348 (US); TELESCA, Rosanna, CH-4052 Basel (CH); TAPLIN, Walter, Hockessin Delaware 19707 (US); FORSYTHE, Neil, Colin, William, Landenberg PA 19350 (US)
(86) International application number: PCT/EP2009/062888
(87) International publication number: WO 2010/040707

(56) References cited:
- WO-A1-98/33761
- WO-A1-03/054029
- WO-A1-2007/002322
- GB-A- 2 427 575

## Description

The gas barrier properties of substrates, such as materials used in packaging, are enhanced by applying a composition comprising a vinyl alcohol / vinyl amide copolymer, a cross-linker and, optionally, a diacrylate or other polyacrylate and a photoinitiator to the material and crosslinking the composition, either by photocuring, that is exposure to irradiation by UV light, visible light, IR irradiation and/or electron beam, or by thermal crosslinking. Optionally, the material may be subjected to a low-temperature plasma discharge or a corona discharge prior to applying the composition. The method provides, for example, flexible packaging materials such as plastic films, with excellent gas barrier properties and excellent printability. Further, the invention is directed to a composition mentioned above.

Packaging materials, such as those for packaging food, medicine, etc., are often used to protect their contents from aging or spoilage. Poly(vinyl alcohol) (PVA) polymers are known to act as oxygen barriers and are frequently encountered in packaging, often as a coating or laminate for flexible packaging materials, to prevent spoilage due to the action of oxygen. Poly(vinyl alcohol) is water soluble and can be applied as a coating or laminate for packaging materials without the use of organic solvents or dispersing agents. However, poly(vinyl alcohol) is highly sensitive to water and as relative humidity increases, poly(vinyl alcohol) becomes more permeable to oxygen presumably due to disruption of the polymer film's crystallinity.

Attempts to overcome the water or humidity sensitivity of PVA have been made. For example, cross-linking PVA has been used to increase the water resistance of a film made of PVA. For example, a cross-linking method employing an isocyanate compound or boric acid has been known. Other methods using a wide variety of cross-linkers are also well known.

PVA copolymers prepared by co-polymerization of vinyl acetate and other vinyl monomers followed by hydrolysis of at least a portion of the acetate groups are also known and can be used as oxygen barriers. Cross-linking to decrease water sensitivity with such copolymers has also been employed.

US Pub. Pat. Appl. 20060116471 discloses a water soluble resin composition, useful as a gas barrier film and packaging material containing a vinyl alcohol / vinyl amine copolymer and a cross-linker having functional groups capable of reacting with amino groups selected from the group consisting of groups formed by a reaction of a secondary amino group with epichlorohydrin, acetoacetyl groups, acid anhydride groups, formamide groups and ester groups. For example, cross-linkers include a polyamide-epichlorohydrin resin, an acetoacetylated poly(vinyl alcohol), a copolymer of maleic anhydride with methyl vinyl ether, a copolymer of maleic anhydride with isobutylene with maleic anhydride, a poly(N-vinylformamide), a (N-vinylformamide) copolymer, and a multifunctional ester.

It is also desirable that packaging materials are capable of being printed on. PVA polymers and copolymers also readily accept ink, such as water based inks, and are used as components in ink receptive materials, such as ink jet media. Water sensitivity can also create problems for the permanence of printed images, for example, images with poor wash fastness may be created.

US Pub. Pat. Appl. No. 20070160780 discloses ink jet media comprising a vinyl alcohol / vinyl amide co-polymer which displays excellent printing characteristics. The copolymer is typically present in a layer applied to a support, for example paper or a rigid or flexible plastic sheet of film. The layer comprising the vinyl alcohol / vinyl amide copolymer may also be advantageously cross-linked to limit or adjust the solubility of the layer.

US Pat. 6,548,121 and US Pub. Pat. Appl. No. 20050147919 disclose methods for producing strongly adherent coatings on a substrate that comprise subjecting the substrate to a low-temperature plasma discharge, a corona discharge etc, applying one or more photoinitiators containing at least one ethylenically unsaturated group, or a mixture of photoinitiator(s) with monomer(s) to the treated substrate, before applying a coating layer. US Pat. 6,048,660 discloses phenylglyoxalic ester photoinitiators and compositions which are useful, for example, in forming these strongly adherent coatings.

WO 98/33761 discloses various phenylglyoxalic esters which may be used as initators for photopolymerization. Further, photocurable compositions comprising said esters and ethylenically unsaturated compounds are disclosed.

WO 2007/002322 is directed to oxygen barrier films comprising a copolymer of vinyl alcohol and vinyl amine combined with a copolymer of a maleic acid and an acrylic acid.

GB 2 427 575 relates to polymeric olefin film structures comprising a polyolefinic substrate and a film formed from poly(vinyl alcohol)-co-poly(vinyl amine) copolymers and an aldehyde-containing cross-linking agent.

As referenced above, one major drawback to poly(vinyl alcohol) as an oxygen barrier is its sensitivity to changes in relative humidity. As relative humidity increases the polymer becomes more permeable to oxygen and its barrier properties deteriorate. The present invention overcomes this liability providing easily prepared films of cross-linked (poly vinyl)alcohol copolymer compositions which demonstrate good oxygen barrier properties at low and high humidity levels.

The present invention provides a method for enhancing the gas barrier properties of materials, such as packaging materials, for example, flexible packaging materials such as plastic films, which method comprises applying to at least one surface of the material a composition comprising:
A) a vinyl alcohol / vinyl amide copolymer
B) a cross-linking agent, for example, a vinyl alcohol polymer or copolymer bearing groups capable of reacting with the vinyl alcohol / vinyl amide copolymer of A
C) optionally a multifunctional acrylate, for example a di-, tri-, tetraacrylate etc., and/or a photoinitiator, and
effecting crosslinking by either photocuring the composition by irradiation with UV light, visible light, and/or electron beam and/or exposing the composition to heat.

For example, the method improves barrier properties of materials toward gases such as oxygen, carbon dioxide, nitrous fumes, water vapour and chlorine etc., one particular embodiment is directed at oxygen.

In the method, the material may optionally be subjected to a low-temperature plasma discharge or a corona discharge prior to applying the composition.

While the cross-linker agent Component B may comprise almost any cross-linking agent that contains at least two groups that will react with the copolymer A, excellent results are achieved when Component B is a vinyl alcohol polymer or copolymer which acts as a cross-linker with Copolymer A, for example, acetoacetylated poly(vinyl alcohol). In certain embodiments using a vinyl alcohol polymer or copolymer as a cross-linking agent, the amount of component B in the composition equals or exceeds the amount of vinyl alcohol / vinyl amide copolymer A.

Also provided is a composition comprising the components A, B and optionally C as described above wherein the vinyl alcohol / vinyl amide copolymer of component A comprises less than 2 mole% of monomer units which are amine containing and the cross-linker is a polymeric resin, for example, a modified poly(vinyl alcohol) such as an acetoacetylated poly(vinyl alcohol), which composition can form a free standing film with excellent gas barrier properties, for example, oxygen barrier properties, or can be applied to the surface of a substrate forming a coating with excellent gas, preferably oxygen, barrier properties when cured, i.e., cross-linked by applying heat, irradiation by UV light, visible light, IR irradiation and/or electron beam.

The films or layers of the invention have excellent adhesion, durability and printability characteristics and are readily printed upon using common commercial techniques.

Thus, a method is provided for enhancing the gas barrier properties of a substrate, for example, the oxygen barrier properties of a substrate, such as a packaging material, for example, flexible packaging materials such as plastic films, for example, a film of polylactic acid (PLA) or polyethylene terephthalate (PET), which method comprises applying to at least one surface of the substrate a composition comprising:
A) a vinyl alcohol / vinyl amide copolymer comprising monomer units of formulae (I) and (II) 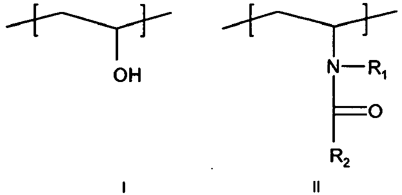
   wherein R₁ and R₂ are independently H or C₁-C₁₂ alkyl, for example H or C₁-C₆ alkyl, for example at least one of R₁ and R₂ is H, often both are H;
   which copolymer contains less than 6 mole%, for example from 0-6 mole%, 0-5 mole%, 0-3 mole%, 0-2 mole% or 0-1 mole% of a repeating unit containing an amino group of formula III, 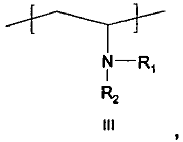 for example a repeating unit of formula III wherein R₁ is H or C₁-C₁₂ alkyl and R₂ is H, such as a monomer unit derived from the hydrolysis of the amide containing unit of formula II,
B) a cross-linker containing groups capable of reacting with the vinyl alcohol / vinyl amide copolymer, for example, a vinyl alcohol polymer or copolymer bearing groups capable of reacting with the vinyl alcohol / vinyl amide copolymer of A,
C) optionally a multifunctional acrylate, for example a di-, tri-, tetraacrylate etc., and/or a photoinitiator, for example a phenyl glyoxalate,
and exposing the composition to irradiation with UV light, visible light, electron beam and/or heat to effect cure, that is, cross-linking.

Accordingly, a method for enhancing the gas barrier properties of a substrate is provided, which method comprises applying to at least one surface of the substrate a composition comprising:
A) a vinyl alcohol / vinyl amide copolymer comprising monomer units of formulae (I) and (II) 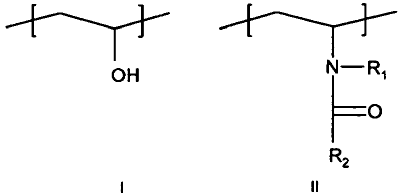
   wherein R₁ and R₂ are independently H or C₁-C₁₂ alkyl, preferably H or C₁-C₆ alkyl, more preferably at least one of R₁ and R₂ is H, most preferably both are H;
   which copolymer contains less than 6 mole% of a repeating unit containing an amino group of formula III, 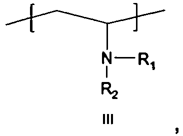
B) a cross-linker containing groups capable of reacting with the vinyl alcohol / vinylamide copolymer,
C) optionally a multifunctional acrylate, preferably a di-, tri-, or tetra-acrylate, a photoinitiator, preferably a phenylglyoxalate, or a mixture thereof,
and exposing the composition to irradiation with UV light, visible light, electron beam and/or heat to effect cure.

Preferably, the copolymer A contains 0-2 mole% of the repeating unit containing an amino group of formula III, more preferably 0-1 mole%.

Further, a method is preferred wherein in the vinyl alcohol / vinyl amide copolymer R₁ and R₂ are H and the photoinitiator is a phenyl glyxolate photoinitiator.

In the method, the surface material may optionally be subjected to a low-temperature plasma discharge or a corona discharge prior to applying the composition.

Preferably, a method is provided, wherein the gas barrier properties for gases, such as oxygen, carbon dioxide, water vapour, chlorine, nitrous fumes and mixtures thereof, of substrates as mentioned above, are enhanced. More preferably, a method is provided, wherein oxygen barrier properties of substrates are enhanced.

Often, UV light and/or visible light is used to cure the composition. Heating may also be employed either together with radiation or as a separate step.

Possible ways of obtaining plasmas under vacuum conditions have been described frequently in the literature. The electrical energy can be coupled in by inductive or capacitive means. It may be direct current or alternating current; the frequency of the alternating current may range from a few kHz up into the MHz range. A power supply in the microwave range (GHz) is also possible. The principles of plasma production and maintenance are described, for example, in the review articles by A. T. Bell, "Fundamentals of Plasma Chemistry" in "Technology and Application of Plasma Chemistry", edited by J. R. Holahan and A. T. Bell, Wiley, New York (1974) and H. Suhr, Plasma Chem. Plasma Process 3(1), 1, (1983). As primary plasma gases it is possible to use, for example, He, argon, xenon, N₂, O₂, H₂, steam or air.

The process can also be carried out under corona discharge conditions. Corona discharges are produced under normal pressure conditions, the ionised gas used being most frequently air. In principle, however, other gases and mixtures are also possible, as described, for example, in Coating 2001, no. 12, 426. The advantage of air as ionisation gas in corona discharges is that the operation can be carried out in an apparatus open to the outside and, for example, a film can be drawn through continuously between the discharge electrodes. Such process arrangements are known and are described, for example, in J. Adhesion Sci. Technol., 7(10), 1993, 1105. Three-dimensional workpieces can be treated with a plasma jet, the contours being followed with the assistance of robots.

Alkyl groups may be within the given limits of carbon atoms linear or branched, where possible. Examples are methyl, ethyl, n-propyl, isopropyl, n-butyl, sec-butyl, isobutyl, tert-butyl, n-pentyl, 2-pentyl, 3-pentyl, 2,2-dimethylpropyl, 1,1,3,3-tetramethylpentyl, n-hexyl, 1-methylhexyl, 1,1,3,3,5,5-hexamethylhexyl, n-heptyl, isoheptyl, 1,1,3,3-tetramethylbutyl, 1-methylheptyl, 3-methylheptyl, n-octyl, 1,1,3,3-tetramethylbutyl and 2-ethylhexyl, n-nonyl, decyl, undecyl, dodecyl. C₁-C₆ alkyl is preferred.

In one embodiment, the composition is applied as part of a solution or dispersion in water, an organic solvent, or a mixture thereof. For example, the composition is applied as a solution in water.

In another embodiment, the composition is applied to the substrate via thermal processing, such as extrusion, co-extrusion or other melt processing method. For example, the substrate comprises a thermoplastic polymer which may be co-extruded with the composition of the invention to form a multi-layer substrate. When applying the composition to the substrate via thermal processing methods, cross-linking may occur during the thermal processing step, e.g., during extrusion or co-extrusion, or in a subsequent heat of photocuring step.

The vinyl alcohol / vinyl amide copolymer A may also contain other, additional monomer units. For example, units from unhydrolyzed vinyl ester (IV) are typically present 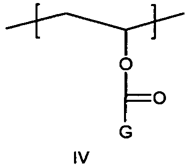 wherein G is C₁-C₁₂ alkyl, preferably C₁-C₆ alkyl, for example methyl, ethyl, propyl, or butyl;
and more than one vinyl amide monomer may be used in preparing the copolymer thus incorporating into the copolymer additional, different amide units (V) 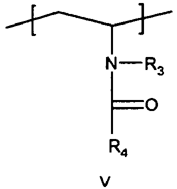 wherein R₃ and R₄ are as described for R₁ and R₂.

Other monomers, such as other vinyl monomers, may also be present during polymerization giving rise to additional repeat units in the copolymer. Groups can also be added to the copolymer hydroxy groups to create various functionalized copolymers.

Often, the copolymer will be a random or block copolymer, generally a random copolymer of the general formula 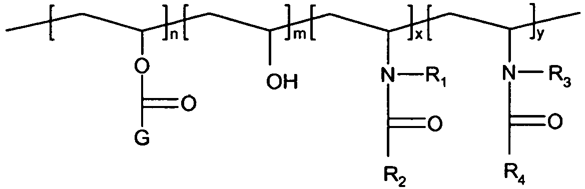 wherein
G is C₁-C₁₂ alkyl,
R₁, R₂, R₃ and R₄ are independently H or C₁-C₁₂ alkyl,
n is from about 0 to about 20 mole%, for example, from about 2 to about 20 mole%,
m is from about 50 to about 99 mole%, for example, from about 60 to about 96 mole%, for example, from about 68 to about 92 mole%,
x is from about 1 to about 50 mole%, for example, from about 4 to about 20 mole%, for example from about 6 to about 12 mole%, and
y is from about 0 to about 20 mole%.

Accordingly, a method is preferred, wherein the copolymer A is of the general formula 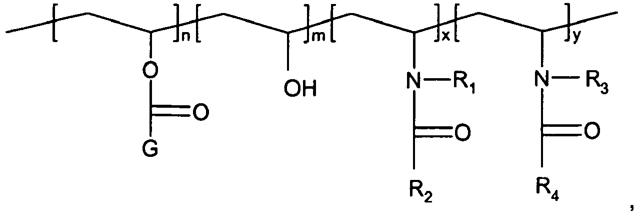 wherein
G is C₁-C₁₂ alkyl,
R₁, R₂, R₃ and R₄ are independently H or C₁-C₁₂ alkyl, preferably H or C₁-C₆ alkyl;
n is from 0 to 20 mole%,
m is from 50 to 99 mole%,
x is from 1 to 50 mole%, and
y is from 0 to 20 mole%.

Typically, y is 0 and the copolymer is of the formula

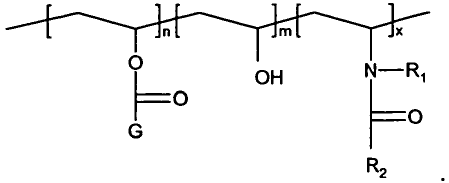

The preceding three formulae are obviously idealized structures and represent only the relative amounts of the various repeat units without any attempt to portray the manner in which the repeat units are attached. Also, the actual copolymers can include a small amount of other species as encountered with any common polymerization reaction.

The cross-linker B can be any cross-linker that contains at least two groups that will react with the copolymer A. The structure of the cross-linker is not particularly limited so long as the composition is effectively cured under the curing conditions mentioned herein. The groups may be the same or different and include, for example, aldehydes, metal compounds, melamine ethers, halohydrins, groups formed by a reaction of a secondary amino group with epichlorohydrin, acetoacetyl groups, glyoxylates, acid anhydride groups, formamide groups and ester groups. The cross-linkers may be small, "monomeric" compounds such as glutaraldehyde, glyoxal, epichlorohydrin or an ammonium zirconium carbonate, or the cross-linkers may be dimeric, oligomeric or polymeric compounds containing groups that react with the copolymer A.

When using a "monomeric" compound as cross-linker, for example, a compound with a molecular weight of less than about 500, the composition will comprise a weight ratio of copolymer to cross-linker of about 10 to 1 to about 10,000 to 1.

For example, one embodiment provides a method which comprises applying to at least one surface of the substrate a composition comprising
A) the vinyl alcohol / vinyl amide copolymer A,
B) about 0.01% to about 10% by weight, based on the weight of the alcohol / vinyl amide copolymer, of a cross-linker compound with a molecular weight of less than about 500, and
C) 0-50% by weight, e.g., 1 to 50% based on the weight of the alcohol / vinyl amide copolymer, of a mixture (combination) containing 15-70 parts of a multifunctional acrylate, for example a di-, tri-, tetraacrylate, 30-70 parts of a photoinitiator and 0-10 parts of a surfactant, and curing the composition by irradiation or exposure to heat, for example, irradiation with UV light and/or visible light (parts are by weight).

Accordingly, a preferred method comprises applying to at least one surface of the substrate a composition comprising
A) the vinyl alcohol / vinyl amide copolymer,
B) 0.01% to 10% by weight, based on the weight of the copolymer A, of a cross-linker compound with a molecular weight of less than 500, and
C) 0 to 50% by weight, based on the weight of the copolymer A, of a mixture containing 15-70% by weight of a multifunctional acrylate, preferably a di-, tri-, or tetraacrylate, 30-70% by weight of a photoinitiator and 0-10% by weight of a surfactant, based on the weight of said mixture, and
curing the composition by exposure to UV light, visible light and/or heat.

In one embodiment of the method, the cross-linkers are polymeric resins, for example, a polyamide-epichlorohydrin resin, an acetoacetylated poly(vinyl alcohol) (a poly(vinyl alcohol) having acetoacetyl groups), a copolymer of maleic anhydride with methyl vinyl ether, a copolymer of maleic anhydride with isobutylene with maleic anhydride, a poly(N-vinylformamide), a (N-vinylformamide) copolymer, and a multifunctional ester or ketone.

In one particular embodiment, the cross-linker is a poly(vinyl alcohol) which has been modified to include the copolymer reactable groups or is a poly(vinyl alcohol) copolymer, wherein the copolymer reactable groups are incorporated via a co-monomer. For example, the cross-linker is acetoacetylated poly(vinyl alcohol) or a PVA copolymer with a vinyl monomer comprising a ketone or ester group, for example a vinyl monomer comprising a nitrobenzoyl substituent. A preferred cross-linker comprises an acetoacetylated poly(vinyl alcohol).

For example, the composition applied to the material to enhance gas, in particular oxygen, barrier properties according to the instant method comprises a vinyl alcohol / vinyl amide copolymer as described above and an acetoacetylated poly(vinyl alcohol) as cross-linker.

When the cross-linker is a polymeric resin, for example, a modified poly(vinyl alcohol), the amount of cross-linking resin in the composition may exceed the weight of the vinyl alcohol / vinyl amide copolymer. For example, the weight ratio of copolymer A to polymer derived cross-linker B may be from about 10 to 1 to about 1 to 10. For example, in one embodiment, the composition comprises a mixture of a vinyl alcohol / vinyl amide copolymer and an acetoacetylated poly(vinyl alcohol) in a weight ratio of from about 3:1 to about 1:3, for example, a weight ratio of vinyl alcohol / vinyl amide copolymer to acetoacetylated poly(vinyl alcohol) of about 1:1 to about 1:3.

For example, one embodiment provides a method which comprises applying to at least one surface of the substrate, often as a dispersion or solution, a composition comprising
A) from about 1 to about 10 parts of the vinyl alcohol / vinyl amide copolymer,
B) from about 1 to about 10 parts of a vinyl alcohol polymer or copolymer, for example an acetoacetylated polyvinyl alcohol, bearing groups capable of reacting with the vinyl alcohol / vinyl amide copolymer as a cross-linker,
C) 0 to 5, for example about 1 to about 5 parts, of a combination containing 15-70 parts, for example 25 to 50 parts, of a multifunctional acrylate, for example a di-, tri-, tetra-acrylate etc, 30-75 parts, for example 45 to 70 parts, of a photoinitiator and 0-10 parts, for example 0.1 to 6 parts, of a surfactant, and
curing the composition by irradiation with UV light and/or visible light, curing the composition by exposure to heat or curing the composition by a heating step combined with an irradiation step. When the composition is applied as a solution or dispersion in solvent, a photo-curing step is typically employed.

Accordingly, a method is preferred, which method comprises applying to at least one surface of the substrate a composition comprising
A) the vinyl alcohol / vinyl amide copolymer,
B) a vinyl alcohol polymer or copolymer bearing groups capable of reacting with copolymer A as a cross-linker,
C) optionally a mixture containing 15-70% by weight of a multifunctional acrylate, preferably a di-, tri-, or tetraacrylate, 30-75% by weight of a photoinitiator and 0-10% by weight of a surfactant, based on the weight of said mixture,
wherein the weight ratio of A to B is of from 1:10 to 10:1 and the weight ratio of A to C is of from 1:0 to 10:5,
and curing the composition by exposure to UV light, visible light and/or heat.

A method is more preferred, which method-comprises applying to at least one surface of the substrate a composition comprising components A, B, and C,
wherein the weight ratio of A to B is of from 1:10 to 10:1 and the weight ratio of A to C is of from 1:5 to 5:1.

A method is most preferred, which method comprises applying to at least one surface of the substrate a composition comprising components A, B, and C,
wherein the weight ratio of A to B is of from 1:8 to 5:2 and the weight ratio of A to C is of from 1:5 to 5:1.

For example, the mixture of component C contains 25-50% by weight of a di-, tri-, or tetraacrylate, 45-70% by weight of a photoinitiator and 0-7.5% by weight of a surfactant, based on the weight of said mixture.

For example, the mixture of component C contains 25-50% by weight of a di-, tri-, or tetraacrylate, 45-70% by weight of a photoinitiator and 0.1-6% by weight of a surfactant, based on the weight of said mixture.

For example, the mixture of component C contains 25-45% by weight of a di-, tri-, or tetraacrylate, 50-70% by weight of a photoinitiator and 0.1-6% by weight of a surfactant, based on the weight of said mixture.

In one embodiment, the above composition is applied as a melt to the surface of a substrate and either subsequently cured by additional heating or curing by irradiation with UV light and/or visible light. For example, a molten mixture comprising A) from about 1 to about 10 parts of the vinyl alcohol / vinyl amide copolymer, B) from about 1 to about 10 parts of a vinyl alcohol polymer or copolymer, for example an acetoacetylated polyvinyl alcohol, bearing groups capable of reacting with the vinyl alcohol / vinyl amide copolymer, and optionally C), is applied via common techniques to the surface of a substrate and then irradiated with UV light and/or visible light. It is also possible that cross-linking will occur during the thermal application of the composition.

In one particular embodiment, the above molten mixture, typically without optional component C), is extruded onto, or co-extruded with a thermoplastic polymer to provide a multilayer substrate wherein-cross-linking of-the composition of the invention occurs during the extrusion or co-extrusion process.

Accordingly, a method is preferred, which method comprises applying via extrusion or co-extrusion to at least one surface of a substrate a composition comprising
A) a vinyl alcohol / vinyl amide copolymer,
B) a vinyl alcohol polymer or copolymer bearing groups capable of reacting with the vinyl alcohol / vinyl amide copolymer as a cross-linker,
C) optionally a mixture containing 15-70% by weight of a multifunctional acrylate, preferably a di-, tri-, or tetraacrylate, 30-75% by weight of a photoinitiator and 0-10% by weight of a surfactant, based on the weight of said mixture,
wherein the weight ratio of A to B is of from 1:10 to 10:1 and the weight ratio of A to C is of from 1:0 to 10:5, and
wherein the composition is cross-linked by irradiation to UV light or visible light or the cross-linking occurs during the extrusion or co-extrusion.

A method is more preferred, wherein the composition comprises
A) the vinyl alcohol / vinyl amide copolymer, and
B) an acetoacetylated poly(vinyl alcohol) as a cross-linker,
wherein the weight ratio of A to B is of from 1:10 to 10:1.

The multifunctional acrylate of component C) is most likely present in compositions which are applied as a dispersion or solution to the surface of the substrate.

The diacrylate of component C may be a diester of acrylic or methacrylic acid and a diol or polyol. In the case of a diester of a polyol, free hydroxyl groups will be present, which in certain instances may be further modified.

The diol component of the diacrylates may be aliphatic and cycloaliphatic diols or polyols containing for example 2 to 12 carbon atoms, including ethylene glycol, 1,2- or 1,3-propanediol, 1,2-, 1,3- or 1,4-butanediol, pentanediol, hexanediol, octanediol, dodecanediol, diethylene glycol, triethylene glycol; polyethylene glycols having molecular weights of for instance 200 to 1500; 1,3-cyclopentanediol, 1,2-, 1,3-or 1,4-cyclohexanediol, 1,4-dihydroxymethylcyclohexane and the like.

Polyols which may be bis esterified with acrylic or methacrylic acid include, for example, glycerol, trimethylolethane, trimethylolpropane, pentaerythritol, dipentaerythritol, sorbitol and the like.

Examples of compounds useful as the diacrylate of component C include ethylene glycol diacrylate, propylene glycol diacrylate, neopentyl glycol diacrylate, hexamethylene glycol diacrylate, polyethylene glycol diacrylate, trimethylolpropane diacrylate, pentaerythritol diacrylate, dipentaerythritol diacrylate, and the like.

Triacrylates and other polyacrylates may also be present in the composition of the present invention, for example, tri-esters, tetra-esters etc. of acrylic or methacrylic add and a polyol, for example, trimethylolpropane triacrylate, pentaerythritol triacrylate, pentaerythritol tetra-acrylate, trimethylolethane triacrylate, trimethylolpropane trimethacrylate, dipentaerythritol triacrylate, dipentaerythritol tetraacrylate, dipentaerythritol pentacrylate, dipentaerythritol hexacrylate, sorbitol triacrylate, sorbitol tetraacrylate, glycerol triacrylate, and the like.

The composition of the present invention may also include corresponding unsubstituted amides such as di- and poly-acrylamides and di and poly-methacrylamides such hexanediacrylamide, and vinyl ethers such as ethylene glycol-divinylether.

However, typically, when the optional components C are present, di- or other polyacrylates are present, for example, diacrylates.

Photoinitiators suitable for use in the invention are in principle any of the compounds and mixtures that form one or more free radicals when irradiated with electromagnetic waves, for example, as described in US Pat 6,548,121, 6,048,660 and US Pub. Pat. Appl. No. 20050147919. These include initiator systems consisting of a plurality of initiators and systems that function independently of one another or synergistically. In addition to coinitiators, for example amines, thiols, borates, enolates, phosphines, carboxylates and imidazoles, it is also possible to use sensitizers, for example acridines, xanthenes, thiazenes, coumarins, thioxanthones, triazines and dyes.

For example, the photoinitator may be selected from the following classes of compounds: benzoins, benzil ketals, acetophenones, halogenated acetophenones, hydroxyalkylphenones, aminoalkylphenones, acylphosphine oxides including bis-acylphosphine oxides, acylphosphine sulfides, acyloxyiminoketones, alkylamino-substituted ketones, phenylglyoxylates, dimeric phenylglyoxalates, benzophenones, oximes and oxime esters. Copolymeriazable photoinitiators, i.e., derivatives of the above chemistry containing reactable ethyleneically unsaturated groups, are also known and may be used.

It is also possible to use combinations of the compounds from the afore-mentioned classes of compounds and combinations with corresponding coinitiator systems and/or sensitizers.

Specific examples of photoinitiators include acetophenone derivatives such as α-hydroxyphenylketones such as 1-hydroxycyclohexylphenylketone, 2-hydroxy-2-methyl-1-phenylpropanone or 2-hydroxy-1-[4-(2-hydroxyethoxy)phenyl]-2-methyl-1-propanone; α-amino-acetophenones such as (4-methylthiobenzoyl)-1-methyl-1-morpholino-ethane, (4-morpholinobenzoyl)-1-benzyl-1-dimethylaminopropane; 4-aroyl-1,3-dioxolanes; benzophenones, such as benzophenone, 2,4,6-trimethylbenzophenone, 4-methylbenzophenone, 2-methylbenzophenone, 2-methoxycarbonylbenzophenone, 4,4'-bis(chloromethyl)-benzophenone, 4-chlorobenzophenone, 4-phenylbenzophenone, 4,4'-bis(dimethylamino)-benzophenone, 4,4'-bis(diethylamino)benzophenone, methyl 2-benzoylbenzoate, 3,3'-dimethyl-4-methoxybenzophenone, 4-(4-methylphenylthio)benzophenone, 2,4,6-trimethyl-4'-phenyl-benzophenone or 3-methyl-4'-phenyl-benzophenone; benzoin alkyl ethers and benzil ketals such as benzil dimethyl ketal; phenylglyoxalates, dimeric phenylglyoxalates and derivatives thereof, such as methylphenylglyoxylic acid ester, 5,5'-oxo-di(ethyleneoxydicarbonylphenyl) or 1,2-(benzoylcarboxy)ethane; monoacylphosphine oxides such as (2,4,6-trimethylbenzoyl)phenylphosphine oxide; bisacylphosphine oxides such as (2,6-dimethoxybenzoyl)-(2,4,4-trimethylpent-1-yl)phosphine oxide, bis(2,4,6-trimethylbenzoyl)phenylphosphine oxide or bis(2,4,6-trimethylbenzoyl)-(2,4-dipentyloxyphenyl)phosphine oxide; trisacylphosphine oxides; oxime esters such as 1-(4-phenylsulfanylphenyl)-butane-1,2-dione 2-oxime-O-benzoate, 1-(4-phenylsulfanylphenyl)-octane-1,2-dione 2-oxime-O-benzoate, 1-(4-phenylsulfanylphenyl)octan-1-one oxime-O-acetate, 1-(4-phenylsulfanylphenyl)-butan-1-one oxime-O-acetate and 1-(4-phenylsulfanylphenyl)-octane-1,2-dione 2-oxime-O-benzoate. Preferred photoinitiators are phenylglyoxylates, dimeric phenylglyoxylates and derivatives thereof.

Coinitiators are, for example, sensitizers that shift or broaden the spectral sensitivity and as a result cause an acceleration of the photopolymerisation and include, for example, aromatic carbonyl compounds, such as, benzophenone derivatives, thioxanthone derivatives, especially also isopropylthioxanthone, anthraquinone derivatives, 3-acylcoumarin derivatives, terphenyls, styrylketones, 3-(aroylmethylene)-thiazolines, camphorquinone, and also eosin, rhodamine and erythrosine dyes.

The use and preparation of such compounds are well known to the person skilled in the art and have already been described in a large number of publications.

For example, excellent results are achieved using as component C, phenylglyoxalates and dimeric phenyl glyoxalates as a photoinitiator along with a polyethyleneglycol diacrylate. Often, a surfactant is also present along when a multifunctional acrylate and photoinitiator are used.

Suitable surfactants may be customary surfactants, such as cationic, anionic or non-ionic surfactants. Suitable examples are listed in Table 1:

**Table1:**

| **Surfactant** | **Type** | **HLB*** | **Solubility** | **Emulsion Type** |
|---|---|---|---|---|
| Zephrym® 3300 B | Anionic, alkyl aryl sulphonate, liquid | 11.4 | Water dispersible | O/W |
| Atlas® G-5000 | Non-ionic, polyalkylene glycol ether, waxy solid | 17 | Water soluble | O/W |
| Synperonic® 1908 | Non-ionic, ethylene diamine alkoxylate copolymer, flake | 28 | Water soluble | O/W |
| Hypermer® B246 | Non-ionic, polymeric surfactant, brown paste | 6 | Water insoluble | W/O |
| Atlox® 4914 | Non-ionic, polymeric surfactant (alkyd-PEG resin), brown paste | 5-7 | Water insoluble | W/O |
| Atlox® 4913 | Non-ionic, acrylic graft copolymer, brown liquid | 11-12 | Water soluble | O/W |
| Prifer® 6813 | | | | |
| Zephrym® PD 7000 | Polymeric surfactant, liquid | | Water soluble | O/W |

The individual components of the invention are well known in the art, typically commercially available and/or described in the cited art.

The composition comprising the vinyl alcohol / vinyl amide copolymer A and cross-linker B and optional components C of the present invention is prepared by any common blending or mixing technique and the components can be added in any order. More than one polymer resin of component A, cross-linker of component B or acrylate or photoinitiator of component C may be present. Other substances, for example, stabilizers, dyes, flow agents, pH adjustors, antifoaming agents, leveling agents etc., often found in similar coating compositions may also be present within a range of not remarkably impairing the effects of the present invention.

For example, the components are dispersed or dissolved in a solvent or other carrier, for example, an organic solvent, water, or a mixture thereof. Most often the solvent is water or predominately water. In one embodiment, the solvent is an aqueous solvent which solvent comprises more than 75% water the rest being mainly organic solvents. Typically, the solvent is water. The amount of the composition in such a dispersion or solution is about 1% to about 50% by weight of the composition based on the total weight of the dispersion or solution.

Thus, a method is preferred, wherein the composition comprising components A, B and C is applied as a from about 1% to about 50% solution or dispersion by weight, based on the total weight of the dispersion or solution in an organic or aqueous solvent. More preferred, the solution or dispersion comprises at least 1% by weight of components A, B and C.

Accordingly, a method is preferred, wherein the composition is applied as a solution or dispersion in an organic or aqueous solvent, said composition comprises of from 1% to 50% by weight, based on the total weight of the dispersion or solution, of components A, B and C.

A method is more preferred, wherein the composition is applied as a solution or dispersion in water.

Examples of suitable solvents are C₁-C₆ alcohols such as ethanol, n-propanol, 2-propanol, n-butanol or 2-butanol, polyols such as ethylene glycol or propylene glycol, esters such as ethyl acetate, ketones such as ethylmethylketone, und aromatic solvents such as toluene, xylene and the like as well as mixtures thereof.

For example, the materials of components A, B and C can be added separately to a solvent with mixing or any two or more of the materials may be premixed prior to addition. The materials may be added neat or as a solution or dispersion in a solvent.

For example, the polymers of component A and the polymeric cross-linkers of component B are often available as solutions or dispersions in water: For example, US Pub. Pat. Appl. 20070160780 provides vinyl alcohol / vinyl amide copolymers of the invention in an aqueous solution. Similarly, polymeric cross-linkers such as acetoacetylated poly(vinyl alcohol) are commercially available in aqueous solutions. Thus the compositions of the invention can be prepared by mixing a predetermined amount of the two aqueous solutions, adding any of component C or other ingredients that may be desired, and readjusting the concentration by adding additional solvent if needed.

The present composition may also be blended to form a slurry or other form of mixture.

The solution or dispersion thus prepared is then applied to the appropriate substrate by, for example, spraying, spin coating, drop coating, drawdown, brushing, dipping or any other standard coating application technique. The coating formulation may also be applied in the form of a slurry a powder.

After application, the composition is cured to effect cross-linking. Typically, cross-linking is effected by exposure to light, i.e., UV light, visible light or a combination of UV and visible light. A number of light exposure devices and techniques for photocuring polymer containing compositions are well known in the art and may be conveniently employed. Any water or other solvent used in the application of the composition can be allowed to evaporate, either under ambient conditions or with heat and/or reduced pressure, either before or after cross-linking.

Heating may also be employed along with light exposure to effect curing, either simultaneously or stepwise. In one embodiment, a heating step and a step involving exposure to light are both employed following application of the vinyl alcohol / vinyl amide copolymer plus cross-linker composition.

Alternately, the composition is prepared by melting together the components A, B and optionally C using commonly encountered processing methods such as extrusion, co-extrusion, melt blending etc. The components may be first blended together and then added to an extruder or melt processor, or the components may be added separately to the processing equipment.

There are many variants of the invention that are hereby encompassed, some examples of which are described below, others are obvious based on the disclosure.

For example, one embodiment of the invention encompasses a method wherein a composition comprising the vinyl alcohol / vinyl amide copolymer A and from about 0.01% to about 10% by weight based on the weight of the copolymer of a cross-linker compound with a molecular weight of less than about 500, is applied as a 1% to about 30% solution or dispersion in water to the surface of a substrate and then after allowing the water to evaporate the composition is cured by exposure to UV light.

In another embodiment, the composition also contains 0-50%, typically, 1 to 50% by weight based on the weight of the copolymer A a combination containing 15-70 parts of a multifunctional acrylate, for example a di-, tri-, or tetraacrylate etc., 30-70 parts of a photoinitiator and 0-10 parts of a surfactant.

In another embodiment, the surface of a substrate is first subjected to a low-temperature plasma discharge or a corona discharge and then a composition comprising the vinyl alcohol / vinyl amide copolymer A, from about 0.01 % to about 10% by weight based on the weight of the copolymer of a cross-linker compound with a molecular weight of less than about 500, and from about 1 to about 50% by weight based on the weight of the copolymer a combination or containing 15-70 parts of a multifunctional acrylate, for example a di-, tri-, tetra-acrylate etc., 30-70 parts of a photoinitiator and 0-10 parts of a surfactant, is applied, and then after allowing the water to evaporate the composition is cured by exposure to UV light.

Another embodiment of the invention provides a method for enhancing the gas barrier properties of a substrate, such as oxygen, carbon dioxide, water vapour, nitrous fumes or chlorine barrier properties of a substrate, in particular the oxygen barrier properties of a substrate, which method comprises applying to at least one surface of the substrate a solution or dispersion comprising, by weight based on the total weight of the dispersion or solution, from about 50% to about 99% an organic or aqueous solvent, typically the solvent is water, and from about 1% to about 50% of a the solution or dispersion a composition comprising:
A) from about 1 to about 10 parts of the vinyl alcohol / vinyl amide copolymer,
B) from about 1 to about 10 parts of a vinyl alcohol polymer or copolymer bearing groups capable of reacting with copolymer A as a cross-linker,
C) 0 to 5 parts, for example, from about 1 to about 5 parts of a combination containing 15-70 parts of a multifunctional acrylate, for example a di-, tri-, tetraacrylate etc., 30-75 parts of a photoinitiator and 0-10 parts of a surfactant,
then evaporating the solvent and curing the composition by irradiation with UV light and/or visible light. In a related embodiment the surface of the substrate is subjected to a low-temperature plasma discharge or a corona discharge prior to applying the composition.

In one specific embodiment, the at least one surface of the substrate is subjected to a low-temperature plasma discharge or a corona discharge and then the surface has applied to it a solution or dispersion comprising, by weight based on the total weight of the dispersion or solution, from about 50% to about 99% an organic or aqueous solvent, typically the solvent is water, and from about 1% to about 50% of a the solution or dispersion a composition comprising:
A) from about 1 to about 5 parts of the vinyl alcohol / vinyl amide copolymer
B) from about 2 to about 8 parts of a vinyl alcohol polymer or copolymer bearing groups capable of reacting with copolymer A as a cross-linker, and
C) from about 1 to about 5 parts of a combination or mixture containing from about 25 to about 50 parts of a di-, tri-, tetraacrylate etc., from about 45 to about 70 parts of a photoinitiator and from about 0 to about 7.5 parts of a surfactant: for example, from about 25 to about 45 parts of a di-, tri-, tetra- acrylate etc., from about 50 to about 70 parts of a photoinitiator and from about 0.1 to about 6 parts of a surfactant,
followed by evaporating the solvent and curing the composition by irradiation with UV light and/or visible light.

In one embodiment of the invention the cross-linker B comprises as a polymeric cross-linker an acetoacetylated poly(vinyl alcohol).

Excellent results are achieved using an aqueous solution containing from about 1 to about 30% for example, from about 5 to about 25%, by weight of the inventive composition.

Excellent results are also achieved when the cross-linker B is a cross-linking vinyl alcohol polymer or copolymer and is present in amounts equal to or greater than the vinyl alcohol / vinyl amide copolymer A, that is where the weight ratio of B to A is from about 1:1 to about 4: 1, for example, from about 1.5 to about 4:1 or from about 2:1 to about 3.5:1.

Excellent results are also achieved when the cross-linker B is a cross-linking vinyl alcohol polymer or copolymer and the combination of component C is present in amount of less than 50% of the A, B and C composition; for example, the composition contains from about 5 to about 35% of C by weight based on the combined weight of A, B and C.

In one particular embodiment, a mixture comprising from about 1 to about 10 parts of the vinyl alcohol / vinyl amide copolymer and from about 1 to about 10 parts of an acetoacetylated polyvinyl alcohol is extruded onto or coextruded with a thermoplastic polymer to produce directly a multi-layered article wherein the vinyl alcohol / vinyl amide copolymer and acetoacetylated polyvinyl alcohol layer is crosslinked during extrusion or co-extrusion.

Upon curing, the composition of the invention forms a film, which under certain circumstances can be a free standing film. In general, the film is a coating layer which adheres strongly to the substrate to which it is applied. As a coating layer, the film of the invention can be very thin, in certain instance less than 0.01 µm (micron), and still enhance the gas barrier properties of the substrate to which it is applied. In general, however, the film thickness of the coating layer of the invention ranges from about 0.01 µm to about 100 µm thick, and often has a thickness of from about 1 µm to about 75 µm, for example from about 2 to about 50 µm.

The substrate or material onto which the composition of the present invention is applied is not particularly limited and can be almost any solid organic or inorganic material of any solid shape. When forming a stand alone layer comprising the present composition, the compositions is laid out over a surface to which it will not adhere. However, the composition is typically applied to a surface to which it will strongly adhere upon curing.

In general, the composition is applied to the surface of a synthetic or naturally occurring polymeric material. For example, the composition is applied to a synthetic organic thermoplastic, elastomeric or thermoset polymer which may also be cross-linked. The composition may be applied to another coating layer, e.g., as part of a multi-layered coating system, and other layers may be applied over the film formed by the present invention. As the films and layers of the present invention are readily printed upon, it is advisable, if overcoating is desired, that printing occur prior to any overcoating.

For example, naturally occurring or synthetic polymers include polyolefins, polyamides, polyurethanes, polyacrylates, polyacrylamides, polyvinyl alcohols, polycarbonates, polystyrenes, polyesters, polyacetals, polysulfones, polyethers, polyether ketones, polylactic acids, cellulose ethers, cellulose esters, natural or synthetic rubbers, halogenated vinyl polymers such as PVC, alkyd resins, epoxy resins, unsaturated polyesters, unsaturated polyamides, polyimides, fluorinated polymers, silicon containing polymers, carbamate polymers and copolymers thereof.

One embodiment of the invention relates to a method wherein the substrate is a synthetic thermoplastic, elastomeric or thermoset organic polymer, preferably a polyethylene terephthalate or a polylactic acid.

The polymer substrate may also have incorporated therein additives such as antioxidants, UV absorbers, hindered amine or other light stabilizers, phosphites or phosphonites, benzo-furan-2-ones, thiosynergists, polyamide stabilizers, metal stearates, nucleating agents, fillers, reinforcing agents, lubricants, emulsifiers, dyes, pigments, dispersants, optical brighteners, flame retardants, antistatic agents, blowing agents and the like, other processing agents or mixtures thereof.

Such polymers and additives are widely known items of commerce.

A particular embodiment of the invention provides a method wherein the gas barrier properties, in particular the oxygen barrier properties, of a polymeric packaging material is enhanced by application and cross-linking of the present vinyl alcohol / vinyl amide copolymer composition. Common examples of polymeric packaging materials for perishable items include thermoplastic sheets and films made from polyethylene and polypropylene, bottles and other containers made from polyesters, polyamides and other synthetic polymers. Many other examples of such materials are encountered in everyday life.

For example, in one embodiment, the packaging material is a polyester substrate, such as PET, PEN (polyethylene naphthalate) or PET or PEN copolymers. Excellent results have been achieved when PET substrates are coated using the present invention.

Polylactic acid, PLA, is an environmentally friendly polymer which can also be used as a packaging material. Also called polylactide polymers, PLA is derived from renewable resources and films of PLA are truly biodegradable. PLA polymers have been widely studied for use in medical applications. PLA may be a replacement for conventional synthetic packaging materials and has found use mainly in high value films, rigid thermoforms, food and beverage containers and coated papers, due in large part to higher costs. Currently, PLA is used, for example, as a food packaging polymer for short shelf life products such as fruit and vegetables. One major drawback for expanding the use of PLA is its high oxygen permeability.

The present invention provides a solution for this particular problem as excellent results have also been achieved when PLA substrates are coated using the present invention.

Accordingly, the present invention relates to a packaging material, preferably a flexible packaging material, obtainable by the method described in any aspect above.

Thus, the present invention relates to a fllexible packaging material, comprising a synthetic organic polymer substrate and a cross-linked layer adhered to its surface, obtainable by the method, which method comprises applying to at least one surface of said substrate a composition comprising
A) the vinyl alcohol / vinyl amide copolymer described above,
B) a vinyl alcohol polymer or copolymer bearing groups capable of reacting with copolymer A as a cross-linker, and
C) optionally a multifunctional acrylate, a photoinitiator or a mixture thereof,
and exposing the composition to irradiation with UV light, visible light, electron beam and/or heat to effect cure.

The term "flexible packaging material" as used herein refers to any flexible or partially flexible material which responds by deforming in the presence of external forces.

Thus, the present invention also provides a packaging material, for example a flexible packaging material, comprising a synthetic organic polymer substrate, including but certainly not limited to a PET or PLA substrate, and a cross-linked layer adhered to its surface, which layer is a film produced according to the instant invention. For example, a PET, PLA or other polymeric substrate upon which is adhered a crosslinked film composition, which composition comprises
A) from about 1 to about 5 parts of the vinyl alcohol / vinyl amide copolymer,
B) from about 2 to about 8 parts of a vinyl alcohol polymer or copolymer bearing groups capable of reacting with copolymer A as a cross-linker, for example, an acetoacetylated polyvinyl alcohol,
C) from about 1 to about 5 parts of a combination containing from about 25 to about 50 parts of a di-, tri-, tetraacrylate etc., from about 45 to about 70 parts of a photoinitiator and from about 0 to about 7.5 parts of a surfactant: for example, from about 25 to about 45 parts of a di-, tri-, tetraacrylate etc., from about 50 to about 70 parts of a photoinitiator and from about 0.1 to about 6 parts of a surfactant.

The synthetic organic polymer substrate can be of almost any thickness, shape and form. In many cases, the substrate when used as a packaging material will be a film or molded article such as a bottle, but sheets and other materials are also employed, perhaps as part of a carton. Thus, in one embodiment, the substrate is a film of 1 or 2 µm to 50 or 100 µm thickness, in another embodiment the substrate is a plastic bottle, etc.

In the practice of the invention it has been found that good improvements in gas, for example oxygen, barrier properties can be obtained by applying to a polymer substrate a solution or dispersion of a composition containing the vinyl alcohol / vinyl amide copolymer A and cross-linker B, in particular a vinyl alcohol polymer or copolymer such as acetoacetylated polyvinyl alcohol as B, without any of the optional component C followed by exposure to UV and/or visible light. It has been found that UV curing of such systems, even without the presence of photoinitiators, often provides superior adhesion of the film than thermal curing of similar systems containing thermally active cross-linking agents when applied as solution or dispersion.

However, adhesion of the film of the invention to the substrate, when applied as a solution or dispersion, as well as adhesion of an ink to the film of the invention, is often improved further by the presence of the mixture of component C in the composition, by subjecting the surface of the substrate to a low-temperature plasma discharge or a corona discharge before application of the composition, or both.

The present method will improve the gas, for example oxygen, barrier properties of a substrate, such as a polymeric film, at low humidity and will also show an improvement over the use of conventional poly(vinyl alcohol) polymers at high humidities. In addition, the present method is simple to employ and provides a film that is active even at very low thickness and is readily printed upon with good ink durability using any common printing technique.

As many embodiments of the instant invention employ a water soluble composition, a gas barrier film can be produced without using an organic solvent which offers advantages regarding environmental and safety issues. Also, in many embodiments no dispersant is used, and when a dispersant is used the amount is very low.

Thus, the method of the present invention provides, for example, a packaging material which has high gas barrier properties, e.g. oxygen barrier properties, even in high humidity, prepared using safe and environmentally friendly materials and procedures.

Another embodiment of the invention relates to novel compositions useful in forming films with excellent gas barrier characteristics, for example, a novel composition comprising:
A) 1 to 10 parts by weight of a vinyl alcohol / vinyl amide copolymer comprising monomer units of formulae (I) and (II) 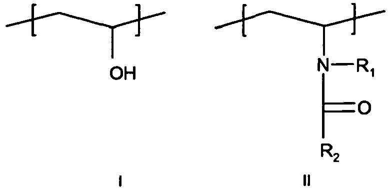
   wherein R₁ and R₂ are independently H or C₁-C₁₂ alkyl, for example H or C₁-C₆ alkyl, for example at least one of R₁ and R₂ is H, often both are H; which copolymer contains less than 2 mole%, for example from 0-2 mole% or 0-1 mole% of a repeating unit containing an amino group of formula III, 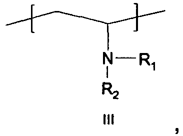 wherein R₁ is H or C₁-C₁₂ alkyl and R₂ is H,
B) 1 to 10 parts by weight of a vinyl alcohol polymer or copolymer bearing groups capable of reacting with copolymer A, for example, a modified poly(vinyl alcohol) such as an acetoacetylated poly(vinyl alcohol),
C) 0 to 5 parts by weight, for example 1 to 5 parts by weight of a multifunctional acrylate, for example a di-, tri-, tetra- acrylate etc, and/or a photoinitiator, for example a phenylglyoxalate.

Accordingly, the present invention relates to a composition comprising
A) a vinyl alcohol / vinyl amide copolymer comprising monomer units of formulae (I) and (II) 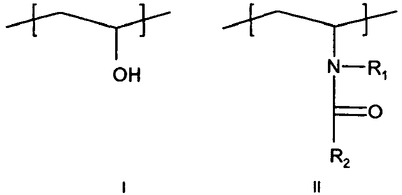
   wherein R₁ and R₂ are independently H or C₁-C₁₂ alkyl, preferably H or C₁-C₆ alkyl, more preferably R₁ and R₂ are H;
   which copolymer contains from 0-2 mole%, preferably 0-1 mole% of a repeating unit containing an amino group of formula III, 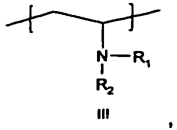 wherein R₁ is H or C₁-C₁₂ alkyl and R₂ is H,
B) a vinyl alcohol polymer or copolymer bearing groups capable of reacting with copolymer A, preferably a modified poly(vinyl alcohol), more preferably an acetoacetylated poly(vinyl alcohol),
C) optionally a multifunctional acrylate, preferably a di-, tri-, or tetraacrylate, a photoinitiator, preferably a phenylglyoxalate, or a mixture thereof,
wherein the weight ratio of A to B is of from 1:10 to 10:1 and the weight ratio of A to C is of from 1:0 to 10:5.

Preferably, the weight ratio of A to C is of from 1:1 to 10:5.

This composition can be a solution or dispersion in an organic or aqueous solvent as above and can form a free standing film with excellent gas barrier properties such as oxygen barrier properties or be applied to the surface of a substrate forming a coating with excellent gas barrier properties such as oxygen barrier properties when cured by applying heat, irradiation by UV light, visible light, IR irradiation and/or electron beam.

The gas barrier film and the packaging material thus obtained have good gas barrier properties even in high humidity such as oxygen, carbon dioxide, water vapour, chlorine or nitrous fumes barrier properties, have high safety and are available at a low cost since they can easily be produced, and they are useful for various applications such as food application, medicine application and industrial application.

The Examples which follow illustrate the invention without limiting it ("%" and "parts" are by weight unless otherwise specified):

### EXAMPLES

In the following examples, GLASCOL^{®} R910 is a commercially available vinyl alcohol / vinyl amide copolymer prepared according to US Pub. Pat. Appl. No. 20070160780, containing between about 6 and about 12 mole% vinyl amide monomer.
GOSEFIMER Z-410 is a commercially available acetoacetylated poly(vinyl alcohol). EPICROSS WS500 and EPICROSS CR5L are commercially available thermal cross-linker.

### Coated PET Films

The coating formulations 1-9, see Table 2 below, are prepared as aqueous solutions at 10% by weight total solids, the solutions are then applied using conventional drawdown techniques to PET films and dried to form 20 µm coatings. The samples prepared from formulations 2, 3, 5 and 6 are thermally cross-linked; the samples prepared from formulations 7-9 are cross-linked by exposure to radiation from a FUSION H&V BULB at a dose of 1,500 mJ in ambient atmosphere. Each coated film is then subjected to a simple wet double rub test to test water sensitivity. The number of wet double rubs needed to remove the film is shown in the final column of Table 2.

**Table 2: Water Sensitivity**

| Formulation | wt% Glascol^{®} R910 | wt% Gosefimer Z-410 | Thermal Cross-linker (wt%) | # Rubs |
|---|---|---|---|---|
| 1 | - | 100 | - | 5 |
| 2 | - | 95 | 5% Epicross CR5L | 10-15 |
| 3 | - | 95 | 5% Epicross WS500 | 10-15 |
| 4 | 100 | - | - | 3-5 |
| 5 | 95 | - | 5% Epicross CR5L | 10 |
| 6 | 95 | - | 5% Epicross WS500 | 10 |
| 7 | 25 | 75 | - | > 30 |
| 8 | 50 | 50 | - | 20-25 |
| 9 | 75 | 25 | - | 15-20 |

All the cross-linked coatings demonstrate less water sensitivity than the non-cross-linked coatings 1 and 4 as demonstrated by the number of rubs needed to remove the coating. The UV cross-linked coatings 7-9 are superior to the thermally cross-linked coatings 2, 3, 5 and 6 when applied this method and the above materials.

### Oxygen Permeability

The UV cured samples prepared from formulation 7-8 were tested for OXYGEN BARRIER properties at 0% relative humidity and 60-70% relative humidity. While performance of the films is better at low humidity, each coated film show good to excellent performance relative to uncoated PET film at both humidity levels.

### Coated PLA Films

The following aqueous solutions are prepared using GLASCOL^{®} R910 (available as a 10% aqueous solution) as Component A, GOSEFIMER Z-410 (available as a 10% aqueous solution) as Component B, and as component C a mixture of 34.2% polyethylene glycol 400 diacrylate as multifunctional acrylate, 61.0% polymeric phenylglyoxylate as photoinitiator and 4.8% of a surfactant (a dodecylbenzene sulfonic acid derivative) as shown in Table 3. Parts (of solids) are by weight, each formulation is diluted to 100 total parts with water.

Each formulation is coated onto a Corona treated polylactic acid film (EARTHFIRST™ PLA, SIDAPLAX^{®}, s.t.:52 g/s²) at 12 µm thickness after drying using the appropriate MAYER bar and standard draw down techniques and then cured using a 200 W/cm m.p. mercury lamp, curing speed: 35 m/min. Water sensitivity is again measured using a wet double rub test and adhesion is measured using a standard tape test, the percentage of film removed is given.

**Table 3:**

| Formulation | Comp. A | Comp. B | Comp. C | #Rubs | Tape Test |
|---|---|---|---|---|---|
| 10 | 2.6 | 7.4 | 0 | 10-15 | > 50% |
| 11 | 1.3 | 3.7 | 0 | 5-10 | > 50% |
| 12 | 2.6 | 7.4 | 1 | 20-25 | 0% |
| 13 | 2.6 | 7.4 | 2 | 5-10 | 0% |
| 14 | 2.6 | 7.4 | 5 | 15-20 | 10-20% |
| 15 | 1.3 | 3.7 | 1 | 5-10 | 20% |
| 16 | 2.3 | 6.7 | 1 | 10-15 | 0% |
| 17 | 1.7 | 5.0 | 3.3 | 15-20 | 0% |
| 18 | 1.3 | 3.7 | 5 | 5-10 | 0% |

| | | | | | |
|---|---|---|---|---|---|
| * Formulation 10 was also thermally cured at 50°C for 5 minutes in a separate test took 5 rubs or less to remove the film. | | | | | |

### Ink Adhesion

Each formulation 10-18 is coated onto a Corona treated polylactic acid film (EARTH FIRS™ PLA, SIDAPLAX^{®}, s.t.: 52 g/s²) at 4 µm thickness and UV cured as above. The samples are then printed on with FLINT GROUP^{®} UV cyan flexo ink and the ink is UV cured using the same conditions as the film.

All experimental coating formulations show excellent printability.

Evaluation of adhesion performance is measured by a standard tape test (1 minute time interval).
Formulations 10, 11 show poor ink adhesion (50% or more ink removed).
Formulation 15 demonstrates better adhesion, about 20% ink removed.
Formulations 12-14 and 16-18 show excellent ink adhesion, 0% ink removed.

### Oxygen Permeability

Formulations 10, 12 and 17 are again coated onto corona treated polylactic acid film (EARTHFIRST™ PLA, SIDAPLAX^{®}, s.t.: 52 g/s²) as above to form 12 µm thick cross-linked films. Samples of each plus samples of untreated PLA are tested for oxygen permeability by measuring the oxygen transmission rate (OTR) following ASTM procedures at 0% and 70% humidity. The results are given in Table 4 below. While there some variance in the readings at high humidity, all coated samples not only greatly outperform the PLA standard, but show good oxygen barrier properties even at high humidity (lower numbers is less oxygen permeation).

**Table 4: Oxygen permeability results at T: 23°C at 0% and 70% humidity (RH: relative humidity)**

| **Formulation** | **OTR cm²(CC)/m² 24 h bar 23°C - 0% RH** ASTM D3985 | **OTR cm²/m² 24 h bar 23°C - 70% RH ASTM F 1927-07** | **OTR cm²/m² 24 h bar 23°C - 70% RH ASTM F 1927-07** |
|---|---|---|---|
| | | Coated side in contact with 70% RH | Coated side in contact with 0% RH |
| PLA Standard (No coating) | 362,1 - 367,4 - 364,2 | 352,8 - 365,5 - 352,8 | - |
| 10 | 5,4 - 1,6 - 2,8 | 79,7 - 58,6 - 60,2 | 1,3 - 3,2 |
| 12 | 1,6 - 1,6 - 2,8 | 6,9 - 5,2 - 57,2 | 6,0 - 2,8 |
| 17 | 27,3 - 38,0 - 58,0 | 57,3 - 208,0 - 226,2 | 43,8 - 52,6 |

## Claims

1. A method for enhancing the gas barrier properties of a substrate, which method comprises applying to at least one surface of the substrate a composition comprising:
A) a vinyl alcohol / vinyl amide copolymer comprising monomer units of formulae (I) and (II) 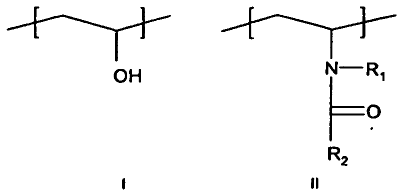
wherein R₁ and R₂ are independently H or C₁-C₁₂ alkyl, preferably H or C₁-C₆ alkyl, more preferably R₁ and R₂ are H;
which copolymer contains less than 6 mole% of a repeating unit containing an amino group of formula III, 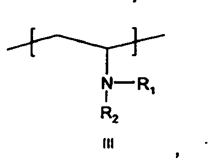
B) a cross-linker containing groups capable of reacting with the vinyl alcohol / vinylamide copolymer,
C) optionally a multifunctional acrylate, preferably a di-, tri-, or tetra-acrylate, a photoinitiator, preferably a phenylglyoxalate, or a mixture thereof,
and exposing the composition to irradiation with UV light, visible light, electron beam and/or heat to effect cure.

2. A method according to claim 1, wherein the at least one surface of the substrate is subjected to a low-temperature plasma discharge or a corona discharge prior to applying the composition.

3. A method according to claim 1 or 2, wherein the gas barrier properties towards gases selected from oxygen, carbon dioxide, water vapour, chlorine, nitrous fumes or a mixure thereof, preferably for oxygen, is enhanced.

4. A method according to claims 1 to 3, wherein the copolymer A is of the general formula 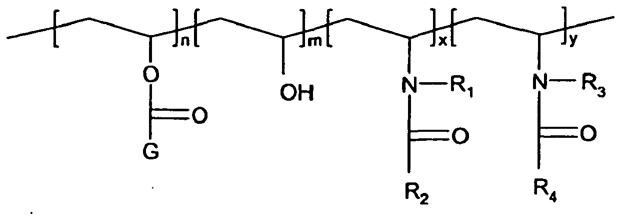 wherein
G is C₁-C₁₂ alkyl,
R₁, R₂, R₃ and R₄ are independently H or C₁-C₁₂ alkyl,
n is from 0 to 20 mole%,
m is from 50 to 99 mole%,
x is from 1 to 50 mole%, and
y is from 0 to 20 mole%.

5. A method according to claim 1 to 4, which method comprises applying to at least one surface of the substrate a composition comprising
A) the vinyl alcohol / vinyl amide copolymer,
B) 0.01% to 10% by weight, based on the weight of the copolymer A, of a cross-linker with a molecular weight of less than 500, and
C) 0 to 50% by weight, based on the weight of the copolymer A, of a mixture containing 15-70% by weight of a multifunctional acrylate, 30-70% by weight of a photoinitiator and 0-10% by weight of a surfactant, based on the weight of said mixture,
and curing the composition by exposure to UV light, visible light and/or heat.

6. A method according to claims 1 to 4, which method comprises applying to at least one surface of the substrate a composition comprising
A) the vinyl alcohol / vinyl amide copolymer,
B) a vinyl alcohol polymer or copolymer bearing groups capable of reacting with copolymer A as a cross-linker,
C) a mixture containing 15-70% by weight of a multifunctional acrylate, 30-75% by weight of a photoinitiator and 0-10% by weight of a surfactant, based on the weight of said mixture, wherein the weight ratio of A to B is of from 1:10 to 10:1 and the weight ratio of A to C is of from 1:0 to 10:5,
and curing the composition by exposure to UV light, visible light and/or heat.

7. A method according to claim 6, which method comprises applying to at least one surface of the substrate a composition comprising components A, B, and C,
wherein the weight ratio of A to B is of from 1:8 to 5:2 and the weight ratio of A to C is of from 1:5 to 5:1.

8. A method according to claims 1 to 7, wherein the composition comprising components A, B and C is applied as a from 1% to 50% solution or dispersion by weight, based on the total weight of the dispersion or solution, in an organic or aqueous solvent.

9. A method according to claim 8, wherein the composition is applied as a solution or dispersion in water.

10. A method according to claims 1 to 4 and 6 to 9, wherein the cross-linker B comprises an acetoacetylated poly(vinyl alcohol).

11. A method according to claims 1 to 10, wherein the substrate is a synthetic thermoplastic, elastomeric or thermoset organic polymer, preferably a polyethylene terephthalate or a polylactic acid.

12. A method according to claim 11, which method comprises applying via extrusion or co-extrusion to at least one surface of the substrate a composition comprising
A) a vinyl alcohol / vinyl amide copolymer,
B) a vinyl alcohol polymer or copolymer bearing groups capable of reacting with the vinyl alcohol / vinyl amide copolymer as a cross-linker,
C) a mixture containing 15-70% by weight of a multifunctional acrylate, 30-75% by weight of a photoinitiator and 0-10% by weight of a surfactant, based on the weight of said mixture, wherein the weight ratio of A to B is of from 1:10 to 10:1 and the weight ratio of A to C is of from 1:0 to 10:5, and
wherein the composition is cross-linked by irradiation to UV light or visible light or the crosslinking occurs during the extrusion or co-extrusion.

13. A method according to claim 12, wherein the composition comprises
A) the vinyl alcohol / vinyl amide copolymer, and
B) an acetoacetylated poly(vinyl alcohol) as a cross-linker,
wherein the weight ratio of A to B is of from 1:10 to 10:1.

14. A flexible packaging material obtained by the method according to claims 1 to 13.

15. A composition comprising
A) a vinyl alcohol / vinyl amide copolymer comprising monomer units of formulae (I) and (II) 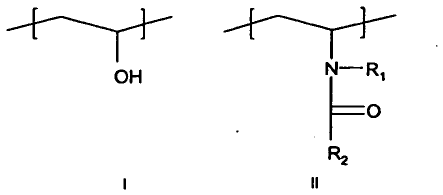
wherein R₁ and R₂ are independently H or C₁-C₁₂ alkyl, preferably H or C₁-C₆ alkyl, more preferably R₁ and R₂ are H;
which copolymer contains from 0-2 mole%, preferably 0-1 mole% of a repeating unit containing an amino group of formula III, 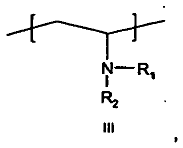 wherein R₁ is H or C₁-C₁₂ alkyl and R₂ is H,
B) a vinyl alcohol polymer or copolymer bearing groups capable of reacting with copolymer A, preferably a modified poly(vinyl alcohol), more preferably an acetoacetylated poly(vinyl alcohol),
C) a multifunctional acrylate, preferably a di-, tri-, or tetraacrylate, a photoinitiator, preferably a phenylglyoxalate, or a mixture thereof,
wherein the weight ratio of A to B is of from 1:10 to 10:1 and the weight ratio of A to C is of from 1:0 to 10:5.

## Patentansprüche

1. Verfahren zur Verbesserung der Gasbarriereeigenschaften eines Substrats, bei dem man auf mindestens eine Oberfläche des Substrats eine Zusammensetzung, umfassend:
A) ein Vinylalkohol/Vinylamid-Copolymer, umfassend Monomereinheiten der Formeln (I) und (II) 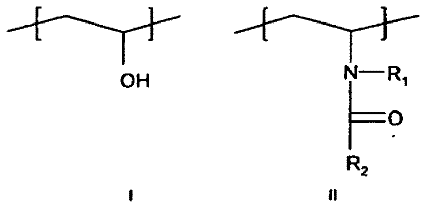
wobei R₁ und R₂ unabhängig für H oder C₁-C₁₂-Alkyl, vorzugsweise H oder C₁-C₆-Alkyl und weiter bevorzugt H stehen;
wobei das Copolymer weniger als 6 Mol-% einer Wiederholungseinheit mit einer Aminogruppe der Formel III 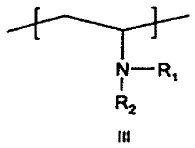 enthält,
B) einen Vernetzer mit Gruppen, die zur Reaktion mit dem Vinylalkohol/Vinylamid-Copolymer befähigt sind,
C) gegebenenfalls ein multifunktionelles Acrylat, vorzugsweise ein Di-, Tri- oder Tetraacrylat, einen Photoinitiator, vorzugsweise ein Phenyl-glyoxalat, oder eine Mischung davon,
aufbringt und die Zusammensetzung zur Härtung mit UV-Licht, sichtbarem Licht, Elektronenstrahlen und/oder Wärme bestrahlt.

2. Verfahren nach Anspruch 1, bei dem man die mindestens eine Oberfläche des Substrats vor dem Aufbringen der Zusammensetzung einer Tieftemperaturplasmaentladung oder einer Korona-Entladung unterwirft.

3. Verfahren nach Anspruch 1 oder 2, bei dem die Gasbarriereeigenschaften gegenüber aus Sauerstoff, Kohlendioxid, Wasserdampf, Chlor, nitrosen Gasen oder einem Gemisch davon ausgewählten Gasen, vorzugsweise für Sauerstoff, verbessert werden.

4. Verfahren nach den Ansprüchen 1 bis 3, bei dem das Copolymer A die allgemeine Formel 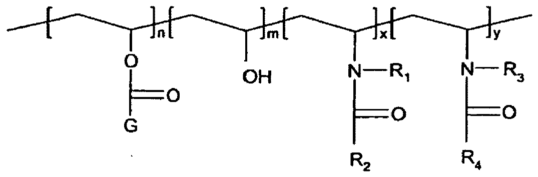 aufweist, wobei
G für C₁-C₁₂-Alkyl steht,
R₁, R₂, R₃ und R₄ unabhängig für H oder C₁-C₁₂-Alkyl stehen,
n für 0 bis 20 Mol-% steht,
m für 50 bis 99 Mol-% steht,
x für 1 bis 50 Mol-% steht und
y für 0 bis 20 Mol-% steht.

5. Verfahren nach den Ansprüchen 1 bis 4, bei dem man auf mindestens eine Oberfläche des Substrats eine Zusammensetzung, umfassend
A) das Vinylalkohol/Vinylamid-Copolymer,
B) 0,01 bis 10 Gew.-%, bezogen auf das Gewicht des Copolymers A, eines Vernetzers mit einem Molekulargewicht von weniger als 500 und
C) 0 bis 50 Gew.-%, bezogen auf das Gewicht des Copolymers A, einer Mischung, die 15-70 Gew.-% eines multifunktionellen Acrylats, 30-70 Gew.-% eines Photoinitiators und 0-10 Gew.-% eines Tensids, bezogen auf das Gewicht der Mischung, enthält,
aufbringt und die Zusammensetzung durch Bestrahlung mit UV-Licht, sichtbarem Licht und/oder Wärme härtet.

6. Verfahren nach den Ansprüchen 1 bis 4, bei dem man auf mindestens eine Oberfläche des Substrats eine Zusammensetzung, umfassend
A) das Vinylalkohol/Vinylamid-Copolymer,
B) ein Vinylalkohol-Polymer oder -Copolymer mit Gruppen, die zur Reaktion mit Copolymer A befähigt sind, als Vernetzer,
C) eine Mischung, die 15-70 Gew.-% eines multifunktionellen Acrylats, 30-75 Gew.-% eines Photoinitiators und 0-10 Gew.-% eines Tensids, bezogen auf das Gewicht der Mischung, enthält,
wobei das Gewichtsverhältnis von A zu B 1:10 bis 10:1 beträgt und das Gewichtsverhältnis von A zu C 1:0 bis 10:5 beträgt,
aufbringt und die Zusammensetzung durch Bestrahlung mit UV-Licht, sichtbarem Licht und/oder Wärme härtet.

7. Verfahren nach Anspruch 6, bei dem man auf mindestens eine Oberfläche des Substrats eine Zusammensetzung, die die Komponenten A, B und C umfasst, aufbringt,
wobei das Gewichtsverhältnis von A zu B 1:8 bis 5:2 beträgt und das Gewichtsverhältnis von A zu C 1:5 bis 5:1 beträgt.

8. Verfahren nach den Ansprüchen 1 bis 7, bei dem man die Zusammensetzung, die die Komponenten A, B und C umfasst, als 1- bis 50-gew.-%ige Lösung oder Dispersion, bezogen auf das Gesamtgewicht der Dispersion bzw. Lösung, in einem organischen oder wässrigen Lösungsmittel aufbringt.

9. Verfahren nach Anspruch 8, bei dem man die Zusammensetzung als Lösung oder Dispersion in Wasser aufbringt.

10. Verfahren nach den Ansprüchen 1 bis 4 und 6 bis 9, bei dem der Vernetzer B einen acetoacetylierten Poly(vinylalkohol) umfasst.

11. Verfahren nach den Ansprüchen 1 bis 10, bei dem es sich bei dem Substrat um ein synthetisches thermoplastisches, elastomeres oder duroplastisches organisches Polymer, vorzugsweise ein Polyethylenterephthalat oder eine Polymilchsäure, handelt.

12. Verfahren nach Anspruch 11, bei dem man durch Extrusion oder Coextrusion auf mindestens eine Oberfläche des Substrats eine Zusammensetzung, umfassend
A) ein Vinylalkohol/Vinylamid-Copolymer,
B) ein Vinylalkohol-Polymer oder -Copolymer mit Gruppen, die zur Reaktion mit Copolymer A befähigt sind, als Vernetzer,
C) eine Mischung, die 15-70 Gew.-% eines multifunktionellen Acrylats, 30-75 Gew.-% eines Photoinitiators und 0-10 Gew.-% eines Tensids, bezogen auf das Gewicht der Mischung, enthält,
wobei das Gewichtsverhältnis von A zu B 1:10 bis 10:1 beträgt und das Gewichtsverhältnis von A zu C 1:0 bis 10:5 beträgt,
aufbringt, wobei die Zusammensetzung durch Bestrahlung mit UV-Licht oder sichtbarem Licht vernetzt wird oder die Vernetzung während der Extrusion bzw. Coextrusion erfolgt.

13. Verfahren nach Anspruch 12, bei dem die Zusammensetzung
A) das Vinylalkohol/Vinylamid-Copolymer und
B) einen acetoacetylierten Poly(vinylalkohol) als Vernetzer
umfasst, wobei das Gewichtsverhältnis von A zu B 1:10 bis 10:1 beträgt.

14. Flexibles Verpackungsmaterial, erhalten durch das Verfahren nach den Ansprüchen 1 bis 13.

15. Zusammensetzung, umfassend
A) ein Vinylalkohol/Vinylamid-Copolymer, umfassend Monomereinheiten der Formeln (I) und (II) 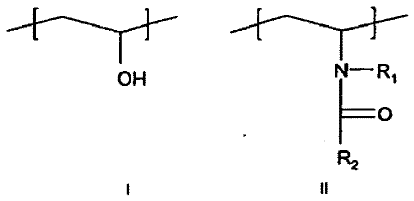 wobei R₁ und R₂ unabhängig für H oder C₁-C₁₂-Alkyl, vorzugsweise H oder C₁-C₆-Alkyl und weiter bevorzugt H stehen;
wobei das Copolymer 0-2 Mol-%, vorzugsweise 0-1 Mol-%, einer Wiederholungseinheit mit einer Aminogruppe der Formel III 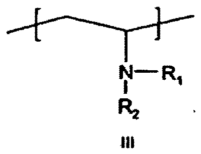 worin R₁ für H oder C₁-C₁₂-Alkyl steht und R₂ für H steht, enthält,
B) ein Vinylalkohol-Polymer oder -Copolymer mit Gruppen, die zur Reaktion mit Copolymer A befähigt sind, vorzugsweise einen modifizierten Poly(vinyl-alkohol), weiter bevorzugt einen acetoacetylierten Poly(vinylalkohol),
C) ein multifunktionelles Acrylat, vorzugsweise ein Di-, Tri- oder Tetraacrylat, einen Photoinitiator, vorzugsweise ein Phenylglyoxalat, oder eine Mischung davon,
wobei das Gewichtsverhältnis von A zu B 1:10 bis 10:1 beträgt und das Gewichtsverhältnis von A zu C 1:0 bis 10:5 beträgt.

## Revendications

1. Procédé pour améliorer les propriétés de barrière aux gaz d'un substrat, lequel procédé comprend l'application à au moins une surface du substrat d'une composition comprenant :
A) un copolymère alcool vinylique / amide vinylique comprenant des motifs monomères des formules (I) et (II) 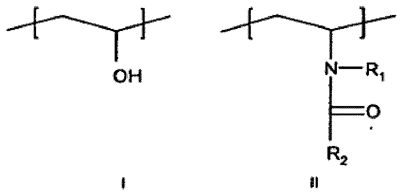
dans lesquelles R₁ et R₂ représentent indépendamment H ou un alkyle en C₁-C₁₂, de préférence H ou un alkyle en C₁-C₆, mieux R₁ et R₂ représentent H ;
lequel copolymère contient moins de 6 % en moles d'un motif répétitif contenant un groupe amino de formule (III) 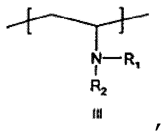
B) un agent de réticulation contenant des groupes susceptibles de réagir avec le copolymère alcool vinylique / amide vinylique,
C) éventuellement un acrylate multifonctionnel, de préférence un di-, tri- ou tétra-acrylate, un photoinitiateur, de préférence un phénylglyoxalate, ou un mélange de ceux-ci,
et l'exposition de la composition à une irradiation avec un rayonnement UV, une lumière visible, un faisceau d'électrons et/ou de la chaleur pour effectuer un durcissement.

2. Procédé selon la revendication 1, dans lequel l'au moins une surface du substrat est soumise à une décharge de plasma à basse température ou une décharge corona avant l'application de la composition.

3. Procédé selon la revendication 1 ou 2, dans lequel les propriétés de barrière aux gaz envers des gaz choisis parmi l'oxygène, le dioxyde de carbone, la vapeur d'eau, le chlore, les vapeurs nitreuses ou un mélange de ceux-ci, de préférence pour l'oxygène, sont améliorées.

4. Procédé selon les revendications 1 à 3, dans lequel le copolymère A répond à la formule générale 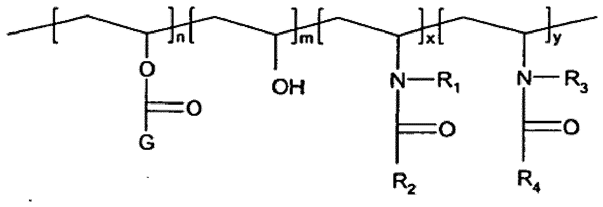 dans laquelle
G est un alkyle en C₁-C₁₂,
R₁, R₂, R₃ et R₄ représentent indépendamment H ou un alkyle en C₁-C₁₂,
n vaut de 0 à 20 % en moles,
m vaut de 50 à 99 % en moles,
x vaut de 1 à 50 % en moles, et
y vaut de 0 à 20 % en moles.

5. Procédé selon les revendications 1 à 4, lequel procédé comprend l'application à au moins une surface du substrat d'une composition comprenant
A) le copolymère alcool vinylique / amide vinylique,
B) 0,01 % à 10 % en poids, rapporté au poids du copolymère A, d'un agent de réticulation avec un poids moléculaire de moins de 500, et
C) 0 à 50 % en poids, rapporté au poids du copolymère A, d'un mélange contenant 15-70 % en poids d'un acrylate multifonctionnel, 30-70 % en poids d'un photoinitiateur et 0-10 % en poids d'un tensioactif, rapporté au poids dudit mélange,
et le durcissement de la composition par exposition à un rayonnement UV, une lumière visible et/ou de la chaleur.

6. Procédé selon les revendications 1 à 4, lequel procédé comprend l'application à au moins une surface du substrat d'une composition comprenant
A) le copolymère alcool vinylique / amide vinylique,
B) un polymère ou copolymère d'alcool vinylique portant des groupes susceptibles de réagir avec le copolymère A comme agent de réticulation, et
C) un mélange contenant 15-70 % en poids d'un acrylate multifonctionnel, 30-75 % en poids d'un photoinitiateur et 0-10 % en poids d'un tensioactif, rapporté au poids dudit mélange,
le rapport pondéral de A à B étant de 1:10 à 10:1 et le rapport pondéral de A à C étant de 1:0 à 10:5,
et le durcissement de la composition par exposition à un rayonnement UV, une lumière visible et/ou de la chaleur.

7. Procédé selon la revendication 6, lequel procédé comprend l'application à au moins une surface du substrat d'une composition comprenant les composants A, B et C,
le rapport pondéral de A à B étant de 1:8 à 5:2 et le rapport pondéral de A à C étant de 1:5 à 5:1.

8. Procédé selon les revendications 1 à 7, dans lequel la composition comprenant les composants A, B et C est appliquée sous la forme d'une solution ou dispersion à 1 % à 50 % en poids, rapporté au poids total de la dispersion ou solution, dans un solvant organique ou aqueux.

9. Procédé selon la revendication 8, dans lequel la composition est appliquée sous la forme d'une solution ou dispersion dans l'eau.

10. Procédé selon les revendications 1 à 4 et 6 à 9, dans lequel l'agent de réticulation B comprend un poly(alcool vinylique) acétoacétylé.

11. Procédé selon les revendications 1 à 10, dans lequel le substrat est un polymère organique synthétique thermoplastique, élastomère ou thermodurcissable, de préférence un téréphtalate de polyéthylène ou un acide polylactique.

12. Procédé selon la revendication 11, lequel procédé comprend l'application par extrusion ou co-extrusion à au moins une surface du substrat d'une composition comprenant
A) un copolymère alcool vinylique / amide vinylique,
B) un polymère ou copolymère d'alcool vinylique portant des groupes susceptibles de réagir avec le copolymère alcool vinylique / amide vinylique comme agent de réticulation, et
C) un mélange contenant 15-70 % en poids d'un acrylate multifonctionnel, 30-75 % en poids d'un photoinitiateur et 0-10 % en poids d'un tensioactif, rapporté au poids dudit mélange,
le rapport pondéral de A à B étant de 1:10 à 10:1 et le rapport pondéral de A à C étant de 1:0 à 10:5, et
la composition étant réticulée par irradiation avec un rayonnement UV ou une lumière visible ou la réticulation se produisant pendant l'extrusion ou co-extrusion.

13. Procédé selon la revendication 12, dans lequel la composition comprend
A) le copolymère alcool vinylique / amide vinylique, et
B) un poly(alcool vinylique) acétoacétylé comme agent de réticulation,
le rapport pondéral de A à B étant de 1:10 à 10:1.

14. Matériau d'emballage flexible obtenu par le procédé selon les revendications 1 à 13.

15. Composition comprenant
A) un copolymère alcool vinylique / amide vinylique comprenant des motifs monomères des formules (I) et (II) 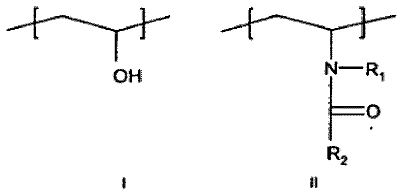
dans lesquelles R₁ et R₂ représentent indépendamment H ou un alkyle en C₁-C₁₂, de préférence H ou un alkyle en C₁-C₆, mieux R₁ et R₂ représentent H ;
lequel copolymère contient 0-2 % en moles, de préférence 0-1 % en moles d'un motif répétitif contenant un groupe amino de formule (III) 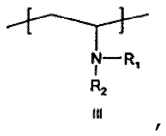
dans laquelle R₁ représente H ou un alkyle en C₁-C₁₂ et R₂ représente H,
B) un polymère ou copolymère d'alcool vinylique portant des groupes susceptibles de réagir avec le copolymère A, de préférence un poly(alcool vinylique) modifié, mieux un poly(alcool vinylique) acétoacétylé, et
C) un acrylate multifonctionnel, de préférence un di-, tri- ou tétra-acrylate, un photoinitiateur, de préférence un phénylglyoxalate, ou un mélange de ceux-Ci,
le rapport pondéral de A à B étant de 1:10 à 10:1 et le rapport pondéral de A à C étant de 1:0 à 10:5.
